# EUROPEAN PATENT APPLICATION

(11) **EP 2 367 054 A1**
(43) Date of publication of application: **21.09.2011**
(21) Application number: 11155390.5
(22) Date of filing: 22.02.2011
(51) Int. Cl.: G03B 21/16, H04N 5/74

(54) **Turbulent air stream for cooling a liquid crystal panel**

(30) Priority: 26.02.2010 JP 2010042284
(71) Applicant: Sanyo Electric Co., Ltd., Osaka 570-8677 (JP)
(72) Inventor: Kawano, Tsuyoshi, Moriguchi-shi Osaka 570-8677 (JP)
(74) Representative: Glawe, Delfs, Moll

(57) **Abstract**

In a projector device having a light source (12), a plurality of panels (27, 28, 29, 30) for modulating light emitted from the light source in accordance with video information, the panels containing a liquid crystal panel (27, 28, 29) and a plurality of polarizing panels (30) arranged in parallel, an air blower (46) for blowing air to the liquid crystal panel and the plurality of polarizing panels, and a housing (11) in which the light source, the liquid crystal panel, the polarizing panels and the air blower are mounted, a turbulence promoting member (50) for disturbing an air stream flowing between two adjacent panels is provided at an upstream position of the air stream in a gap between the two adjacent panels so as to extend in a direction perpendicular to the air stream.

## Description

### BACKGROUND OF THE INVENTION

### 1. Field of the Invention

The present invention relates to a projector device for modulating light emitted from a light source by an optical element, and a projection light image after the modulation onto a screen by a projection lens.

### 2. Description of the Related Art

There is known a projector device including a light source, an optical element for modulating light emitted from the light source in accordance with video information, a projection lens for projecting a modulated projection light image onto a screen, and an air blower for blowing air to the optical element to cool the optical element (for example, see JP-A-2003-066534). In this type projector device, a turbulent flow promoting member extending in a direction perpendicular to air flow from an air blow-out opening through which air blown from an air blower is blown out to the optical element is provided between the air blow-out opening and the optical element, and the air flow is disturbed by the turbulent flow promoting member to thereby promote heat transfer and thus enhance the cooling efficiency.

However, in the construction of the above projector, the turbulence promoting member is disposed at the upstream side of the optical element, and thus turbulence flow is reduced at a place which is far away from the turbulence flow promoting member, for example, in the neighborhood of the center of the optical element or at the downstream side of the optical element. Therefore, the heat transfer effect is insufficient, and the cooling efficiency is not sufficiently enhanced.

### SUMMARY OF THE INVENTION

Therefore, an object of the present invention is to solve the above problem of the conventional technique and provide a projector device that enhances a cooling efficiency.

In order to attain the above object, a projector device having a light source (12), a plurality of panels (27, 28, 29, 30) for modulating light emitted from the light source in accordance with video information, the panels containing a liquid crystal panel (27, 28, 29) and a plurality of polarizing panels (30) arranged in parallel, an air blower (46) for blowing air to the liquid crystal panel and the plurality of polarizing panels, and a housing (11) in which the light source, the liquid crystal panel, the polarizing panels and the air blower are mounted, is characterized in that a turbulence promoting member (50) for disturbing an air stream flowing between two adjacent panels is provided at an upstream position of the air stream in a gap between the two adjacent panels so as to extend in a direction perpendicular to the air stream.

In the above projector device, the turbulence promoting member is disposed in proximity to an optical path of the panel.

In the above projector device, the turbulence promoting member is disposed to be near to an incident face of the polarizing panel.

In the above projector device, each of the polarizing panels is formed by joining polarizing film to a surface of a glass base material, and the turbulence promoting member is disposed to be near to the polarizing film.

In the above projector device, the cross-sectional shape of the turbulence promoting member is designed in a rectangular shape whose one side is perpendicular to the air stream.

In the above projector device, the turbulence promoting member is designed to have an outer shape whose dimension is substantially equal to substantially one third of the gap between two adjacent panels.

According to the present invention, the turbulence promoting member for disturbing an air stream flowing between two adjacent panels is provided at an upstream position of the air stream in a gap between the two adjacent panels so as to extend in a direction perpendicular to the air stream. Therefore, turbulence generated by the turbulence promoting member can be kept even in the neighborhood of the panels and at the downstream side of the air stream, so that the heat transfer can be promoted and the cooling efficiency can be enhanced.

### BRIEF DESCRIPTION OF THE DRAWINGS

Fig. 1 is a diagram showing the construction of a projector device according to an embodiment of the present invention;
Fig. 2 is a perspective view showing the internal construction of the projector device;
Fig. 3 is a side view showing an optical modulator;
Figs. 4A to 4D show a wire support structure, wherein Fig. 4A is a front view of the wire support structure, Fig. 4B is a bottom view showing the wire support structure, Fig. 4C is a side view showing the wire support structure, and Fig. 4D is a cross-sectional view taken along A-A line of Fig. 4C;
Fig. 5 is a side view showing an experiment device;
Figs. 6A and 6B are diagrams showing an experiment in which a wire arrangement position is changed along a gap direction, wherein Fig. 6A is a cross-sectional view showing the wire arrangement position, and Fig. 6B is a diagram showing an experiment result;
Figs. 7A and 7B are diagrams showing an experiment in which the wire arrangement position is changed along an air flowing direction, wherein Fig. 7A is a cross-sectional view showing the wire arrangement position, and Fig. 7B is a diagram showing an experiment result;
Figs. 8A and 8B are diagrams showing an experiment in which the diameter of the wire is changed, wherein Fig. 8A is a cross-sectional view showing the arrangement position of the wire, and Fig. 8B is a diagram showing an experiment result; and
Figs. 9A and 9B are diagrams showing an experiment in which the wire diameter is changed, wherein Fig. 9A is a diagram showing the cross-sectional shape of the wire, and Fig. 9B is a diagram showing an experiment result.

### DETAILED DESCRIPTION OF THE PREFERRED EMBODIMENTS

Preferred embodiments according to the present invention will be described hereunder with reference to the accompanying drawings.

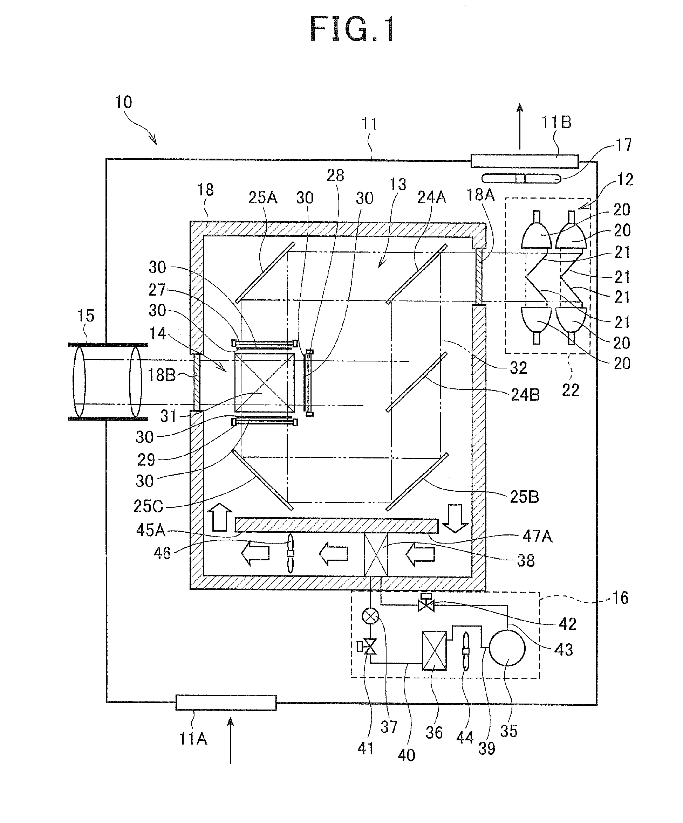

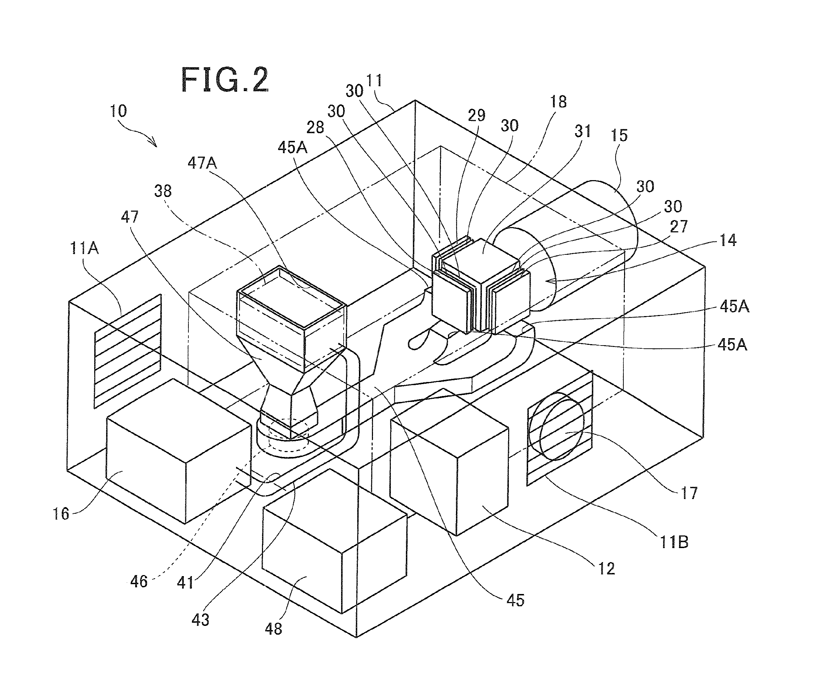

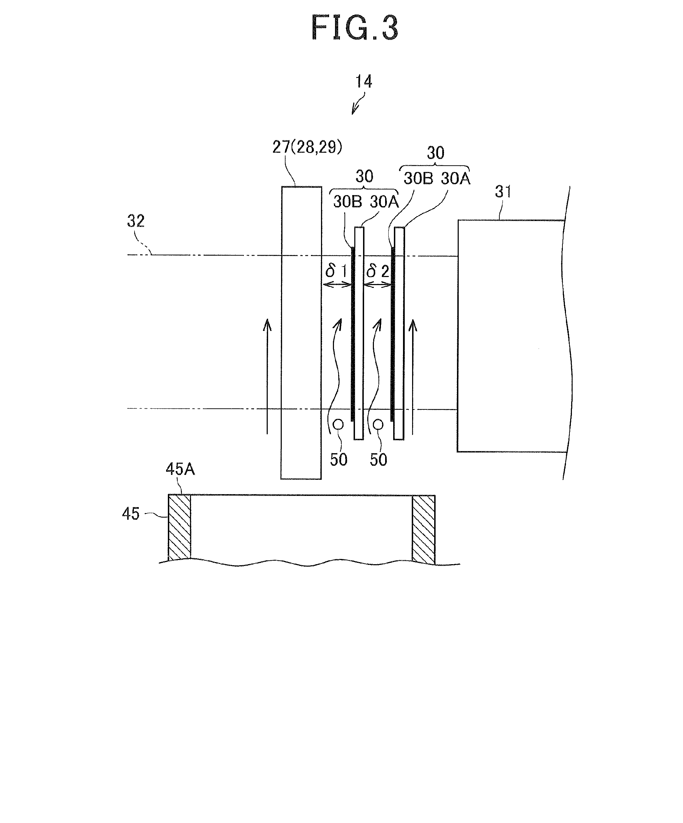

Fig. 1 is a diagram showing the construction of a projector device according to an embodiment, and Fig. 2 is a perspective view showing the internal construction of the projector device. In Fig. 2, a member constituting an optical system of the projector device is omitted from the illustration. Fig. 3 is a side view showing an optical modulator. In the following description, the up-and-down direction, the right-and-left direction and the front-and-rear direction represent those directions when the projector device is viewed from the front side thereof while it is installed.

As shown in Fig. 1, the projector device 10 is a liquid crystal projector having a light source 12, a color-separating optical system 13, an optical modulator (optical element) 14, a projection lens 15 and a cooling device 16 for the optical modulator 14 which are mounted in a housing 11. The housing 11 is a planular box-shaped member constructed by using a raw material having an excellent heat radiation property (for example, magnesium). An air suction port 11A for supplying outdoor air into the housing 11 is formed in one side surface of the housing 11, and an air exhaust port 11B having an exhaust fan 17 for exhausting inner air to the outside of the housing is formed in the other side surface.

A hermetically-sealed chamber 18 which is compartmented as a hermetically-sealed space is provided in the housing 11, and the color-separating optical system 13, the optical modulator 14, a heat sink (heat absorbing unit) 38 described later of the cooling device 16, etc. are mounted in the hermetically-sealed chamber 18. Here, the hermetically-sealed is a space in which drift of air (so-called breathing phenomenon) occurs slightly between the inside and outside of the space concerned in connection with temperature variation or the like in the space. This hermetically-sealed space is a planular (flat) box-shaped member formed of a member having an excellent adiathermic (heat insulating) property (for example, rubber or plastic type material whose thermal conductivity is equal to about 0.1W/ (m.K) to 0.3W/(m.K) such as hard polyvinyl chloride, silicon resin, fluorocarbon resin, phenol resin, polycarbonate resin, polystyrene resin or the like. A light transmissible window 18A for leading light emitted from the light source 12 to the color-separating optical system 13 is formed in one side surface confronting the light source 12, and a light transmissible window 18B for leading a projection light image modulated in the optical modulator 14 to the projection lens 15 is formed in the other side surface confronting the projection lens 15. with respect to the hermetically-sealed chamber 18, the outer surface or inner surface of the box-shaped body thereof may be covered with a member having a high adiathermic property (for example, a material having thermal conductivity of 0.1W/m.K or less such as glass wool, hard polyurethane foam, closed-cell elastomer or the like).

The light source 12 has a lamp 20 such as an extra high pressure mercury lamp or the like, and a mirror 21 for emitting light diffused from the lamp 20 (diverging light) forwardly. In this embodiment, the light source 12 has plural (four) lamps 20, and four mirrors 21, and mounted in a lamp box 22 provided in the housing 11.

The color-separating optical system 13 separates a light flux from the light source into color light of respective colors R, G and B, and it comprises first and second dichroic mirrors 24A and 24B for separating this light flux into the respective color light, reflecting mirrors 25A to 25C for leading the respective separated color light flux to the optical modulator 14, a relay lens (not shown), etc.

The irradiation light of the light source 12 is forwardly emitted by the mirror 21, and led to the first dichroic mirror 24A through a light transmissible window 18A of the hermetically-sealed chamber 18. The first dichroic mirror 24A transmits light of a red wavelength band therethrough and reflects light of a cyan (green + blue) wavelength band. The light of the red wavelength band transmitted through the first dichroic mirror 24A is reflected from a reflecting mirror 25A to change the optical path thereof, led to a liquid crystal panel (LCD panel) 27 (described later) as a transmission type display device for red light of the optical modulator 14, and transmitted through the liquid crystal panel 27 to be optically modulated.

Furthermore, the light of the cyan wavelength band reflected from the first dichroic mirror 24A is led to the second dichroic mirror 24B. The second dichroic mirror 24B transmits light of a blue wavelength band and reflects light of a green wavelength band. The light of the green wavelength band reflected from the second dichroic mirror 24B is led to a liquid crystal panel (described later) as a green light transmission type display device of the optical modulator 14, and transmitted through the liquid crystal panel 28 to be optically modulated.

Furthermore, the light of the blue wavelength band transmitted through the second dichroic mirror 24B is passed through total reflection mirrors 25B and 25C, led to a liquid crystal panel 29 (described later) as a blue light transmission type display device of the optical modulator 14 and transmitted through the liquid crystal panel 29 to be optically modulated.

The light modulator 14 has three liquid crystal panels 27, 28 and 29 corresponding to the respective R, G and B, plural (two in this embodiment) polarizing plates (polarizing panels) provided at the emission side of each of the respective liquid crystal panels 27, 28, 29 so as to be spaced from each other through a gap, etc. IN accordance with video information, the liquid crystal panel 27, 28, 29 modulates light which is separated by the color-separating optical system 13 and then led to each of the liquid crystal panels 27, 28, 29.

A prism 31 for combining the respective color light to form a projection light image is disposed in a space defined by the respective liquid crystal panels 27, 28 and 29 and the polarizing plates 30. This prism 31 corresponds to the color-separating optical system 13, and has a reflection face formed of an X-shaped dielectric multilayer film. The light from the respective liquid crystal panels 27, 28 and 29 is set to a single light flux through the reflection face concerned. Reference numeral 32 represents a light flux (optical path) through which light emitted from the light source 12 is led to the respective liquid crystal panels 27, 28 and 29 and the polarizing plates 30.

Each polarizing plate 30 is formed of a member for polarizing light. For example, each polarizing plate 30 is constructed by joining a polarizing film 30B of a synthetic resin or the like to the surface of a glass base material 30A formed of sapphire glass so that the polarizing film 30B is slightly larger than the optical path 32, and the polarizing plate 30B is located at the incident side of the polarizing plate 30 as shown in Fig. 3. The liquid crystal panels 27, 28 and 29 and the polarizing plate 30 produce heat when irradiated with light.

As shown in Fig. 2, the projection lens 15 projects a projection light image from the prism 31 onto a screen (not shown) while enlarging the light image, and it is detachably mounted in a hole formed in the wall surface of the housing 11.

The operation of the optical system of the projector 10 described above will be described.

Light emitted from the light source 12 is separated into light of respective colors R, G and B in the color-separating optical system 13, and the thus-separated R, G and B light is led to the liquid crystal panels 27, 28, 29 as the corresponding light valves. Each light flux led to each liquid crystal panel 27, 28, 29 is modulated in accordance with video information there, passed through the polarizing plates 30 and then becomes a single light-flux projection image in the prism 31 . Thereafter, the projection image concerned is projected onto the screen by the projection lens 15 with being enlarged.

Next, the cooling device 16 will be described.

The cooling device 16 cools the liquid crystal panels 27, 28 and 29, the polarizing plates 30 and the prism 31 of the optical modulator 14, and it has a compressor 35, a radiator 36, an expansion valve 37 and a heat absorber 38. These elements are connected to one another through a pipe to form a refrigerant circuit. That is, a refrigerant discharge pipe 39 of the compressor 35 is connected to the entrance of the radiator 36, and the exist of the radiator 36 is connected to one end of a refrigerant pipe 40. The other end of the refrigerant pipe 40 is connected to the entrance of the heat absorber 38 through an electromagnetic opening/closing valve 41 and the expansion valve 37, and the exit of the heat absorber 38 is connected to a refrigerant suction pipe 43 of the compressor 35 through an electromagnetic opening/closing valve 42 to construct an annular refrigeration circuit. The radiator 36 is an air-cooling type heat exchanger, and an air blowing fan 44 as air blowing means is disposed in the neighborhood (at the side) of the radiator 36. In this embodiment, the expansion valve 37 is used as a device for reducing the pressure of refrigerant, however, the pressure-reducing device is not limited to the expansion valve 37. Any device may be adopted insofar as it can reduce the pressure of the refrigerant to a predetermined pressure, and a device using a capillary tube may be used.

In this construction, the compressor 35, the radiator 36 and the expansion valve 37 of the cooling device 16 are disposed at the outside of the hermetically-sealed chamber 18, and the heat absorber 38 is disposed in the hermetically-sealed chamber 18. Therefore, the refrigerant pipe 40 and the refrigerant suction pipe 43 are disposed so as to penetrate through the side wall of the hermetically-sealed chamber 18.

The compressor 35, the radiator 36 and the expansion valve 37 of the cooling device 16 are disposed in proximity to the air suction port 11A of the housing 11. The light source is disposed between the cooling device 16 and the air exhaust port 11B. Therefore, an air flowing passage intercommunicating with the air suction port 11A and the air exhaust port 11B is formed between the hermetically-sealed chamber 18 and the side wall of the housing 11 in the housing 11. Air supplied from the air suction port 11A into the housing 11 cools the compressor 35 and the radiator 36 of the cooling device 16, and cools the lamp 20 of the light source 12. Thereafter, the air is discharged from the air exhaust port 11B. The temperature of the lamp 20 of the light source 12 increases to a remarkably high temperature than the temperature of the compressor 35 and the radiator 36. Therefore, even after the compressor 35 and the radiator 36 are cooled, the lamp 20 of the light source 12 can be sufficiently cooled.

As shown in Fig. 2, a duct 45 is disposed in the hermetically-sealed chamber 18 to supply cooling air cooled in the heat absorber 38 to the liquid crystal panels 27, 28 and 29 and the polarizingplates 30 of the optical modulator 14. This duct 45 extends horizontally at the lower portion of the hermetically-sealed chamber 18, one end of the duct 45 is branched to three sub ducts (three systems) in conformity with the respective liquid crystal panels 27, 28 and 29, and air blow-out openings 45A which are upwardly opened are formed at the ends of the branched three sub ducts so as to be located at the lower positions of the respective liquid crystal panels 27, 28 and 29. The air blower 46 is mounted at the other end of the duct 45, and an air suction duct 47 extending upwardly in the hermetically-sealed chamber 18 is connected to the upper portion of the air blower 46. The air suction opening 47A of the air suction duct 47 is formed to be enlarged in diameter, and the heat absorber 38 is disposed in the air suction opening 47A. In Fig. 2, reference numeral 48 represents an electrical component box in which a control board for controlling the operation of each part of the projector device 10 is mounted.

When the air blower 46 is operated, air in the hermetically-sealed chamber is sucked through the air suction opening 47A into the air suction duct 47. At this time, the sucked air is deprived of heat by refrigerant flowing through the heat absorber 38 while passing through the heat absorber 38. The cooled air flows through the duct 45, and is supplied through the air blow-out opening 45A of the duct 45 to the respective liquid crystal panels 27, 28 and 29 and the polarizing plates 30. Accordingly, the liquid crystal panels 27, 28 and 29 and the polarizing plates 30 radiate heat to the supplied air to be cooled, and then blown into the hermetically-sealed chamber 18. The blow-out air is sucked through the air suction opening 47A into the air suction duct 47, and circulated in the hermetically-sealed chamber 18. Accordingly, the temperature of the inside of the hermetically-sealed chamber 18 can be kept uniform, and thus the liquid crystal panels 27, 28 and 29, the polarizing plates 30, etc. can be cooled without being affected by the outdoor air temperature, and the respective equipment such as the liquid crystal panels 27, 28, 29, the polarizing plates 30, etc. provided in the hermetically-sealed chamber 18 can be kept to an optimum constant temperature at all times.

When the temperature of the polarizing film 30B exceeds a limit temperature, the polarizing function of the polarizing plate 30 is remarkably lowered. Therefore, the polarizing plate 30 is cooled by blowing air from the air blower 46 to the polarizing plate 30 as described above. However, in the projector device in which pictures of high brightness can be projected, the amount of heat generation from the optical modulator 14 increases, and thus it is required to increase the blowing amount of cooling air by rotating the air blower 46 at high speed. As a result, there is a risk that noise occurring from the air blower 46 increases.

Therefore, according to this embodiment, in order to cool the optical modulator 14 with a small amount of flowing air, wires (turbulence promoting member) 50 extending in a direction perpendicular to the flow direction of air blown from the air blow-out opening 45A are disposed at the upper side of the air blow-out opening 45A of the duct 45. The wires 50 are disposed at the upstream side of the air stream flowing between the respective two adjacent panels 27, 28, 29, 30 in gaps δ1, δ2 between respective two adjacent panels 27, 28, 29, 30. Accordingly, as indicated by arrows in Fig. 3, the flow of air blown out from the air blow-out opening 45A is disturbed by the wires 50, thereby promoting heat transfer and thus enhancing the cooling efficiency.

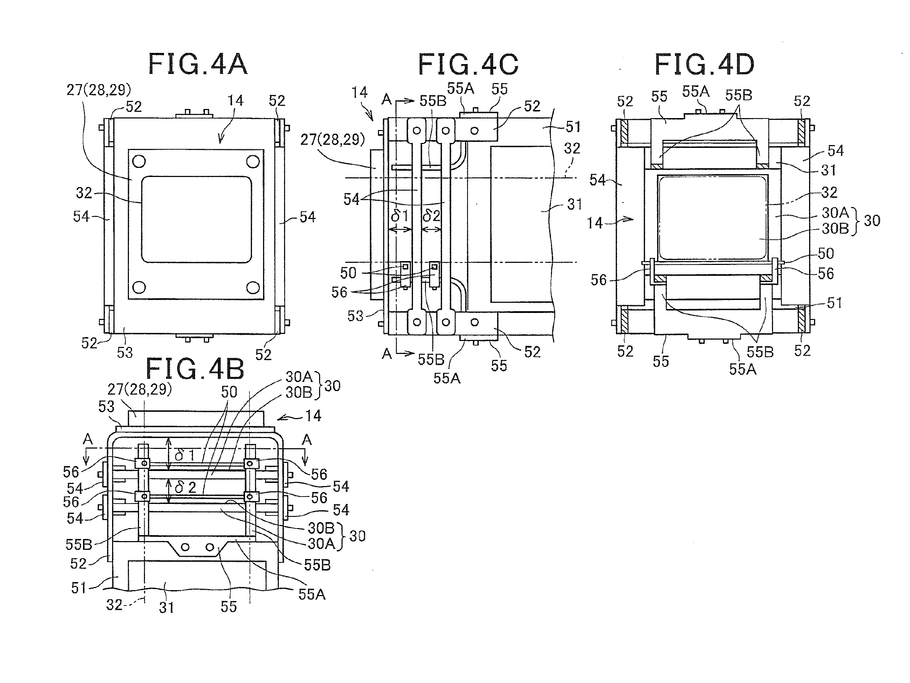

Figs. 4A to 4D are diagrams showing a support structure of the wires 50, wherein Fig. 4A is a front view showing the support structure of the wires 50, Fig. 4B is a bottom view showing the support structure of the wires 50, Fig. 4C is a side view showing the support structure of the wires 50, and Fig. 4D are A-A cross-sectional views of Figs. 4B and 4C.

The prism 31 is mounted in a prism frame 51, and a pair of upper and lower panel frames 52 extending to the incident side are fixed to the side surface of the prism frame 51. The pair of upper and lower panel frames 52 are designed to be substantially U-shaped in bottom view, and the liquid crystal panels 27, 28 and 29 are fixed to the tip faces of the panel frames 52 through a fixing plate 53 which is secured so as to bridge the pair of upper and lower panel frames 52. A pair of polarizing plate supporting frames 54 are fixed to both the side surfaces of the panel frame 52 so as to bridge the pair of upper and lower panel frames 52.

A pair of upper and lower polarizing plate positioning frames 55 are secured to the prism frame 51. Each of the polarizing plate positioning frames 55 has a base portion 55 extending along the front surface of the prism frame 51 to the center, and an extending portion 55B which is branched from the base portion 55A into two parts and extends horizontally to the incident side. Each polarizing plate 30 is pinched at both sides thereof by the pair of right and left polarizing plate support frames 54, and also positioned at the upper and lower sides thereof by the extending portions 55B of the polarizing plate positioning frames 55, whereby each polarizing plate 30 is fixed to the panel frame 52. Each polarizing plate 30 can be exchanged by merely detaching the polarizing plate support frame 54 from the panel frame 52.

The wires 50 are disposed in the gap δ1 between the liquid crystal panel 27, 28, 29 and the polarizing plate 30 and in the gap δ2 between the two polarizing plates 30. Each wire 50 is formed to be longer than the optical path 32, and extends substantially in parallel to the liquid crystal panels 27, 28, 29 and the polarizing plates 30.

Furthermore, each wire 50 is provided to extend to the right and left sides so as to bridge the pair of right and left extending portions 55B, and fixed to the extending portions 55B by substantially L-shaped fixing members 56. Accordingly, the fixing members 56 may be used to fix the wires 50, and thus the wires 50 can be fixed with a simple construction without applying any alteration to the optical modulator 14. Furthermore, the fixing members 56 are fixed to the polarizing plate positioning frame 55 which is not detached when the polarizing plate 30 is exchanged, and thus the polarizing plate 30 can be exchanged without detaching the wires 50.

In order to further reduce the temperature of the polarizing plates 30, a test of measuring the temperature of the polarizing plates 30 while changing the arrangement position and shape of the wires 50 was performed.

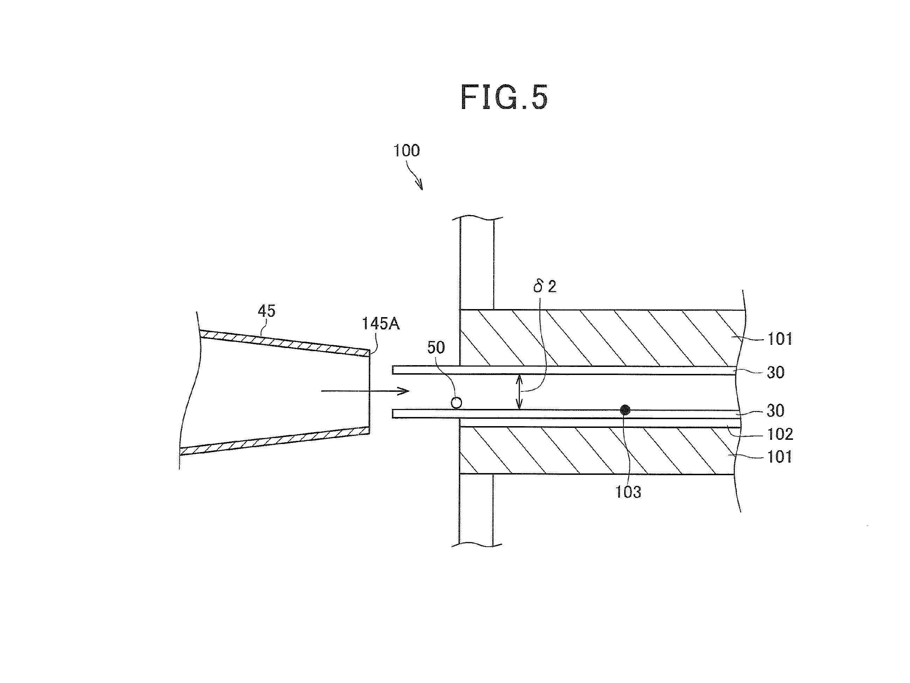

Fig. 5 is a diagram showing a test device. The respective directions such as the up-and-down direction, etc. described below are conformed with the directions shown in Fig. 5.

In the test device 100, the two polarizing plates 30 are arranged so as to be spaced from each other through the gap δ2 of 3mm, and adiabatic materials (heat insulators) 101 are fixed to the opposite surfaces to the confronting surfaces. A heater 102 extending along the polarizing plate 30 is provided to one (at the lower side in Fig. 5) heat insulator 101 so as to come into contact with the polarizing plate 30. The heater 102 is formed to have substantially the same size as the optical path 32 (Fig. 3) so as to copy (imitate) light incident to the polarizing plates 30, and heats the polarizing plates 30 in place of light. A thermocouple 103 for measuring the temperature of the polarizing plates 30 is provided at the center portion of the polarizing plate 30 adjacent to the heater 102.

The air blow-out opening 145A of the duct 45 for blowing out air to the polarizing plate 30 is formed to be smaller than the actual air blow-out opening 45A (Fig. 2), and disposed to be near to the polarizing plates 30. Furthermore, a flow rate measuring unit (not shown) for measuring the flow rate of air passing between the two polarizing plates 30 is provided to the test device 100.

The thus-constructed test device 100 is a device which has sufficient correlation with the actual projector device 10 (Fig. 2) and can obtain substantially the same result as the projector device 10. The room temperature under test is set to 25°C.

A test in which the arrangement position of the wires 50 is changed along the direction of the gap δ2 and the temperature of the polarizing plate is measured will be described.

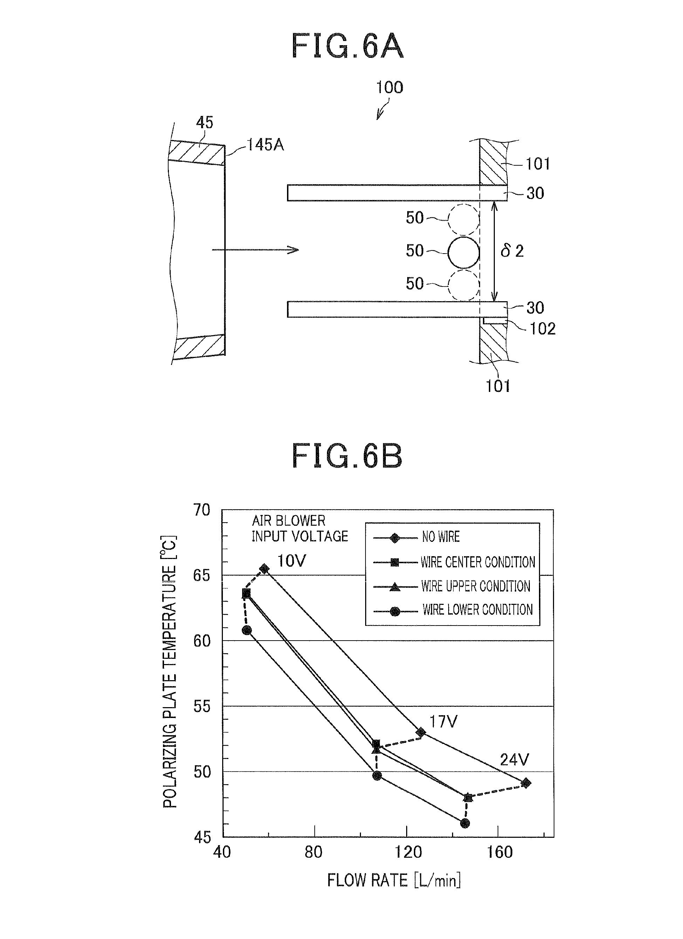

Figs. 6A and 6B are diagrams showing the test for changing the arrangement position of the wires 50 along the gap δ2 direction, wherein Fig. 6A is a cross-sectional showing the arrangement position of the wire 50 and Fig. 6B is a diagram showing a test result. In Fig. 6B, the abscissa axis represents the flow rate, and the ordinate axis represents the temperature of the polarizing plate.

As shown in Fig. 6A, in this test, a wire 50 which is formed to be circular in cross-sectional shape and have a diameter of 1mm is used. This wire 50 is located inside the polarizing plates 30, more specifically, is located in proximity to the heater 102 and at the substantially center position, the upper side or the lower side between the two polarizing plates 30 as shown in Fig. 6A. Here, the arrangement position of the wire 50 is defined as a wire center condition when the wire 50 is located at the substantially center position, as a wire upper condition when the wire 50 is located at the upper side and as a wire lower condition when the wire 50 is located at the lower side. Furthermore, in this test, an input voltage of the air blower 46 (Fig. 2) is varied to 10V, 17V and 24V respectively, and the temperature of the center portion of the polarizing plate 30 (polarizing plate temperature) is also measured even when no wire 50 is arranged (no wire condition) .

As shown in Fig. 6B, the polarizing plate temperature decreases to a lower value irrespective of the value of the input voltage of the air blower 46 (Fig. 2) when the wire 50 (Fig. 6A) is arranged as compared with the case where no wire 50 is arranged. Furthermore, the polarizing plate temperature is substantially equal irrespective of the value of the input voltage of the air blower 46 between the wire center condition and the wire upper condition (i.e., when the wire 50 is substantially center position and when the wire 50 is located at the upper position). However, when the wire 50 is located at the lower side (wire lower condition), the polarizing temperature decreases to a lower value as compared with the wire center condition and the wire upper condition. Particularly, when the input voltage of the air blower 46 is equal to 24V, the polarizing temperature is lower by about 3°C when the wire 50 is located at the lower position (wire lower condition) than when the wire 50 is not arranged. Accordingly, the wire 50 is disposed in proximity to a site which is required to be cooled, for example, the polarizing film 30B (Fig. 3), thereby promoting heat transfer and thus enhancing the cooling efficiency.

Next, a test in which the arrangement position of the wire 5 is changed along the air flowing direction and the temperature of the polarizing plate 30 is measured will be described.

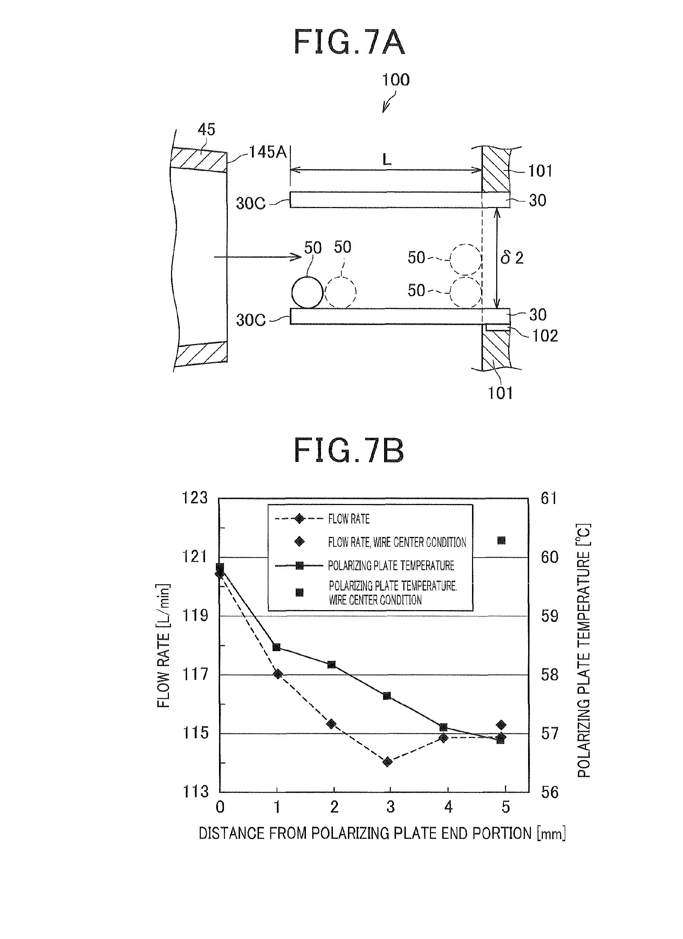

Figs. 7A and 7B are diagrams showing a test in which the arrangement position of the wire 50 is changed along the air flowing direction, wherein Fig. 7A is a cross-sectional view showing the arrangement position of the wire 50, and Fig. 7B is a diagram showing a test result. In Fig. 7B, the abscissa axis represents the distance from the end portion of the polarizing plate, the ordinate axis at the left side represents the flow rate, and the ordinate axis at the right side represents the polarizing plate temperature.

As shown in Fig. 7A, according to this test, a wire 50 having a circular cross-sectional shape and a diameter of 1mm is used, and this wire 50 is disposed at the lower side between the two polarizing plates 30 and located to be far away from the end portion 30C of the polarizing plate 30 at a distance L of 0mm, 2mm, 1mm, 3mm, 4mm, 5mm. In this embodiment, the distance from the end portion 30C of the polarizing plate 30 to the heater 102 (optical path (Fig. 3)) is set to 6mm. In this test, the temperature of the polarizing plate 30 is measured even when the wire 50 is located at the substantially center position between the two polarizing plates 30 and the distance L is set to 5mm (wire center condition).

As shown in Fig. 7B, when the wire 50 (Fig. 7A) is arranged at the lower side and moved along the air flowing direction, the flow rate decreases as the distance L is shifted from 0mm to 3mm, and the when the distance L is equal to 4mm and 5mm, the flow rate slightly increases as compared with the distance L is equal to 3mm. With respect to the polarizing plate temperature, as the distance L is longer, as the wire 50 is disposed to be nearer to the center side of the polarizing plate 30, the polarizing plate temperature decreases. Furthermore, when the wire 50 is located at the substantially center position and the distance L is set to 5mm, the flow rate is little different as compared with the case where the wire 50 is located at the lower side and the distance L is set to 5mm, however, the polarizing plate temperature is lower by about 3.5°C when the wire 50 is located at the lower side as compared with the case where the wire 50 is located at the substantially center position. Accordingly, the wire 50 is disposed in proximity to the optical path 32 without obstructing the optical path 32 (Fig. 3) , whereby the heat transfer can be promoted and the cooling efficiency can be enhanced.

Next, a test in which the diameter of the wire 50 is changed and the temperature of the polarizing plate 30 is measured will be described.

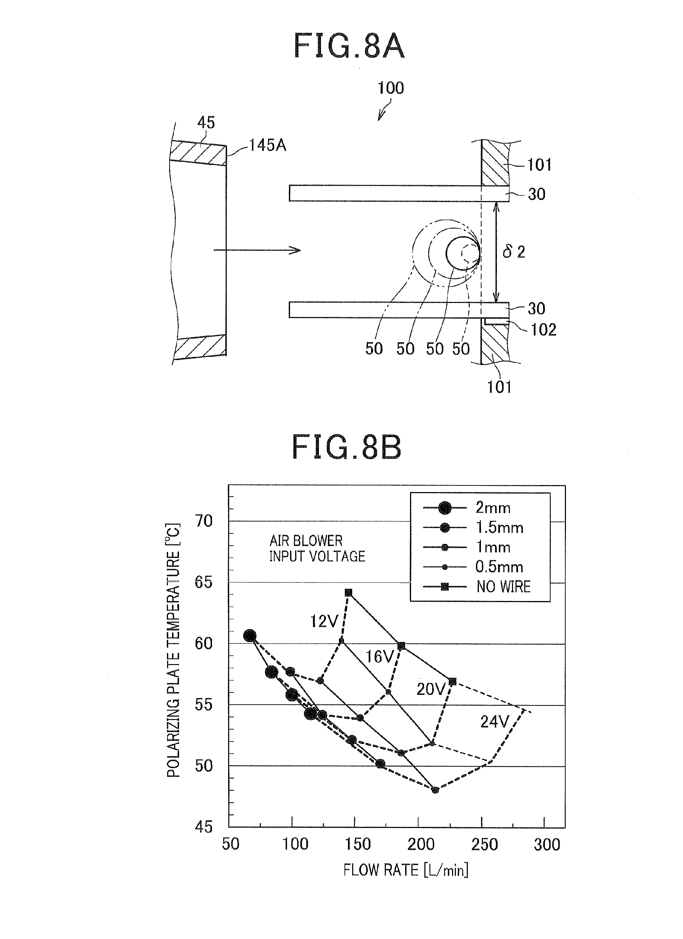

Figs. 8A and 8B are diagrams showing a test in which the diameter of the wire 50 is changed, wherein Fig. 8A is a cross-sectional view showing the arrangement position of the wire 50, and Fig. 8B is a diagram showing a test result. In Fig. 8B, the abscissa axis represents the flow rate, and the ordinate axis represents the polarizing plate temperature.

As shown in Fig. 8A, in this test, four kinds of wires 50 having a circular cross-sectional shape and a diameter of 0.5mm, 1mm, 1.5mm and 2mm are used. Each wire 50 is located in proximity to the heater 2 (optical path 32 (Fig. 3)) and located at the substantially center position between the two polarizing plates 30. In this test, the input voltage of the air blower 46 (Fig. 2) is varied to 12V, 16V, 20V and 24V, and even when the wire 50 is not arranged, the temperature of the polarizing plate 30 is measured.

As shown in Fig. 8B, irrespective of the value of the input voltage of the air blower 46 (Fig. 2), the polarizing plate temperature is lower when the four kinds of wires 50 (Fig. 8A) are arranged as compared with the case where no wire 50 is arranged. Furthermore, irrespective of the value of the input voltage of the air blower 46, the polarizing plate temperature is lowest when the diameter is equal to 1mm, and it increases in the order of 1.5mm, 0.5mm and 2mm in diameter. Accordingly, by setting the diameter of the wire 50 to 1mm, the heat transfer can be promoted, and the cooling efficiency can be enhanced.

Next, a test in which the cross-sectional shape of the wire 50 is changed to measure the temperature of the polarizing plate 30 will be described.

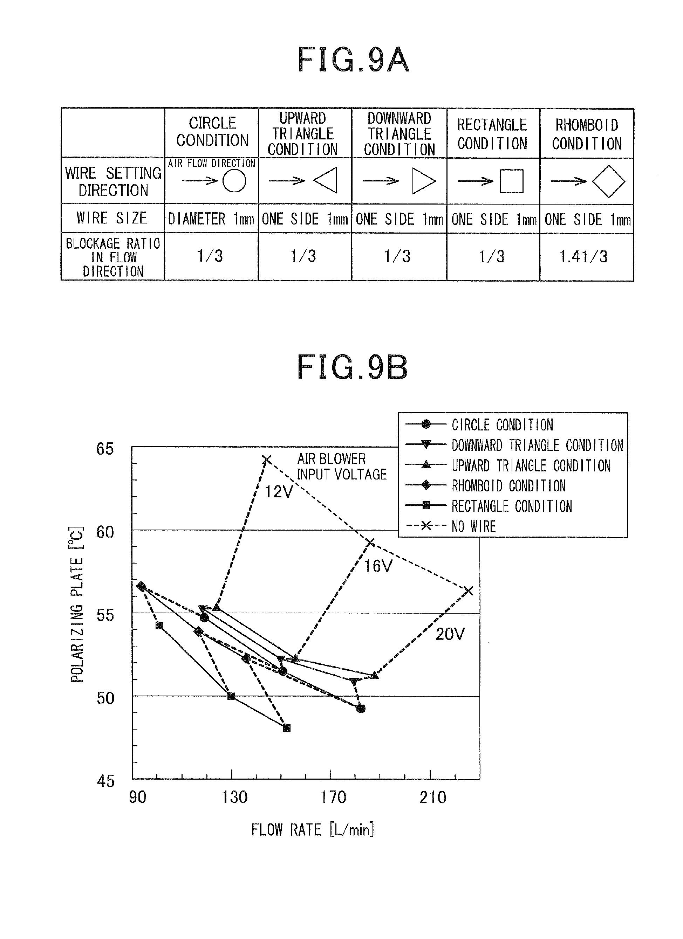

Figs. 9A and 9B are diagrams showing a test in which the cross-sectional shape of the wire 50 is changed, wherein Fig. 9A is a diagram showing the cross-sectional shape of the wire 50, and Fig. 9B is a diagram showing a test result.

As shown in Fig. 9A, in this test, three kinds of wires 50 whose cross-sectional shapes are a circle of 1mm in diameter, a triangle of 1mm in side length and a rectangle of 1mm in side length. When a circular wire 50 is arranged, this arrangement is defined as a circle condition. When a triangular wire 50 is arranged while one apex thereof faces the air flow (air flowing direction), this arrangement is defined as an upward triangle condition. When a triangular wire 50 is arranged while one side thereof faces the air flow, this arrangement is defined as a downward triangle condition. Furthermore, when a rectangular wire 50 is arranged while one side thereof faces the air flow, this arrangement is defined as a rectangle condition. When a rectangular wire 50 is arranged while one apex thereof faces the air flow, this arrangement is defined as a rhomboid condition.

Here, the gap δ2 between the two polarizing plates 30 is equal to 3mm. Therefore, with respect to the circle condition of 1mm in diameter, the upward triangle condition of 1mm in one side, the downward triangle condition of 1mm in one side and the rectangle condition of 1mm in one side, the blockage ratio in the flow direction between the two polarizing plates 30 is equal to 1/3, and with respect to the rhomboid condition of 1mm in one side, the blockage ratio in the flow direction between the two polarizing plates 30 is equal to 1.41/3.

As shown in Fig. 5, each wire 50 is located in proximity to the heater 102 (optical path 32 (Fig. 3)), and at the lower side between the two polarizing plates 30. Furthermore, in this test, the input voltage of the air blower 46 (Fig. 2) is varied to 12V, 16V and 20V, and the temperature of the polarizing plate 30 is measured even when no wire 50 is arranged.

As shown in Fig. 9B, irrespective of the value of the input voltage of the air blower 46 (Fig. 2), the polarizing plate temperature decreases to a lower value when the wires 50 having different cross-sectional shapes (Fig. 9A) are arranged as compared with the case where no wire 50 is arranged. Furthermore, the flow rate is lowest in the case of the rhomboid condition irrespective of the value of the input voltage of the air blower 46, and it increases in the order of the rectangle condition, the downward triangle condition and the circle condition. On the other hand, the polarizing plate temperature is lowest in the case of the rectangle condition irrespective of the value of the input voltage of the air blower 46, and it increases in the order of the circle condition, the downward triangle condition, the upward triangle condition and the rhomboid condition. Accordingly, the wire 50 having the rectangular cross-sectional shape is formed, and this wire 50 is arranged while one side thereof faces the air flow, whereby the heat transfer can be promoted and the cooling efficiency can be enhanced.

According to this embodiment, on the basis of the above test results, two wires 50 having a rectangular cross-sectional shape whose one side is equal to 1mm are used so that the dimension of the outer shape thereof is equal to substantially one third of the gap δ2 between the two polarizing plates 30. Each of the wires 50 is arranged so that one side thereof faces the air flow, and also arranged in proximity to the optical path 32 so as to be near to the polarizing film 30B. Accordingly, turbulence generated by the wires 50 is kept in the neighborhood of the center of the polarizing plates 30 and at the downstream side of the polarizing plates 30, so that the heat transfer can be promoted and the cooling efficiency can be enhanced. Therefore, with respect to even the projector device which can project a high-brightness picture, it is unnecessary to increase the rotational speed of the air blower 46 (Fig. 2) and thus noise occurring from the air blower 46 can be suppressed.

As described above, according to this embodiment, the wire 50 which is provided at the upstream position of the air stream flowing between the two adjacent panels 27, 28, 29, 30 so as to extend in a direction perpendicular to the air flow is disposed in the gap between the two adjacent panels 27, 28, 29, 30. Therefore, as compared with the case where the wire is disposed at the upper side of the two adjacent panels , the wire 50 is disposed at the center side of the panels 27, 28, 29, 30. Therefore, turbulence generated by the wire 50 can be kept even in the neighborhood of the center of the panels 27, 28, 29, 30 and at the downstream side, so that the heat transfer can be promoted and the cooling efficiency can be enhanced.

According to this embodiment, the wires 50 are disposed in proximity to the optical paths 32 of the panels 27, 28, 30, and thus the wires 50 are disposed at the center side of the panels 27, 28, 29, 30. Therefore, the turbulence generated by the wires 50 can be kept even in the neighborhood of and at the downstream side of the panels 27, 28, 29, 30, so that the heat transfer can be promoted and the cooling efficiency can be enhanced.

According to this embodiment, the wire 50 is disposed so as to be near to (in proximity to or approach to) the incident face of the polarizing plate 30. Therefore, the incident faces of the polarizing plates 30 which are near to the liquid crystal panels 27, 28, 29 and easily increased to relatively high temperature are more greatly cooled, and thus the polarizing plates 30 can be effectively cooled.

Furthermore, according to this embodiment, the polarizing plate 30 is formed by joining polarizing film 30B to the surface of a glass base material 30A, and the wire 50 is disposed to be near to the polarizing film 30B. Therefore, the polarizing film 30B can be more greatly cooled, and reduction of the polarizing function of the polarizing plate 30 can be suppressed, so that the lifetime of the polarizing plate 30 can be increased.

Still furthermore, according to this embodiment, the cross-section of the wire 50 is designed in a rectangular shape whose one side is perpendicular to air flow (air stream). Therefore, the polarizing plate 30 can be more greatly cooled as compared with a case where a wire having another cross-sectional shape is arranged.

Still furthermore, according to this embodiment, the outer shape of the wire 50 is formed so that the size thereof is substantially one third (1/3) of the gap δ2 between the two adjacent panels 30. Therefore, the polarizing plates 30 can be more greatly cooled as compared with a case where a wire whose outer shape is another size is disposed.

The present invention is not limited to the above embodiment, and various modifications may be made without departing from the subject matter of the present invention.

For example, in the above embodiment, the wires 50 are disposed in both the gap δ1 between the liquid crystal panel 27, 28, 29 and the polarizing plate 30 and the gap δ2 between the two polarizing plates 30, however, the wires 50 may be disposed in any one of the gap δ1 and the gap δ2.

Furthermore, in the above embodiment, the wire 50 is provided so as to bridge a pair of right and left extending portions 55B, however, it may be provided so as to bridge a pair of upper and lower extending portions 55B.

In the above embodiment, the wires 50 are respectively provided in the gap δ1 between the liquid crystal panel 27, 28, 29 and the polarizing plate and the gap δ2 between the two polarizing plates 30 one by one, however, plural wires 50 may be provided in each of the gaps δ1 and δ2.

Furthermore, in the above embodiment, the polarizing plate 30 is disposed at the emission side of each of the liquid crystal panels 27, 28, 29, however, the polarizing plates 30 may be disposed at both the emission side and the incident side. In this case, the wire 50 may be disposed between the two polarizing plates adjacent to the incident side and/or between the liquid crystal panel 27, 28, 29 and the incident-side polarizing plate 30 which are adjacent to each other.

In the above embodiment, the wire is used as the turbulence promoting member. However, the turbulence promoting member is not limited to the wire, and for example a planar member may be used.

Furthermore, in the above embodiment, the air blower 46 makes air cooled by the cooling device 46 flow to the optical modulator 14, however, it may make non-cooled air to the optical modulator 14.

## Claims

1. A projector device having a light source (12), a plurality of panels (27, 28, 29, 30) for modulating light emitted from the light source in accordance with video information, the panels containing a liquid crystal panel (27, 28, 29) and a plurality of polarizing panels (30) arranged in parallel, an air blower (46) for blowing air to the liquid crystal panel and the plurality of polarizing panels, and a housing (11) in which the light source, the liquid crystal panel, the polarizing panels and the air blower are mounted, **characterized in that** a turbulence promoting member (50) for disturbing an air stream flowing between two adjacent panels is provided at an upstream position of the air stream in a gap between the two adjacent panels so as to extend in a direction perpendicular to the air stream.

2. The projector device according to claim 1, wherein the turbulence promoting member is disposed in proximity to an optical path of the panel.

3. The projector device according to claim 1 or 2, wherein the turbulence promoting member is disposed to be near to an incident face of the polarizing panel.

4. The projector device according to any one of claims 1 to 3, wherein each of the polarizing panels is formed by joining polarizing film to a surface of a glass base material, and the turbulence promoting member is disposed to be near to the polarizing film.

5. The projector device according to any one of claims 1 to 4, wherein the cross-sectional shape of the turbulence promoting member is designed in a rectangular shape whose one side is perpendicular to the air stream.

6. The projector device according to any one of claims 1 to 5, wherein the turbulence promoting member is designed to have an outer shape whose dimension is substantially equal to substantially one third of the gap between two adjacent panels.
